# EUROPEAN PATENT APPLICATION

(11) **EP 3 263 608 A1**
(43) Date of publication of application: **03.01.2018**
(21) Application number: 16755620.8
(22) Date of filing: 25.02.2016
(51) Int. Cl.: C08F 6/08

(54) **METHOD FOR CATALYST REMOVAL**

(30) Priority: 26.02.2015 JP 2015037084
(71) Applicant: Zeon Corporation, Tokyo 100-8246 (JP)
(72) Inventor: HISAOKA,Yasushi, Tokyo 100-8246 (JP); MATSUOKA, Takahito, Tokyo 100-8246 (JP); NAKAMURA, Masao, Tokyo 100-8246 (JP)
(74) Representative: Maiwald Patentanwalts GmbH
(86) International application number: PCT/JP2016/055626
(87) International publication number: WO 2016/136876

(57) **Abstract**

A method for catalyst removal with which it is possible to easily remove the homogeneous catalyst from the polymer solution and to eliminate problems such as an equipment corrosion, an abnormality in the shape of polymer pellets, a deterioration of the polymer in hue or hygroscopicity, and a contamination of the polymer with a foreign matter. The method includes Step 1: a preparation step of the polymer solution, including a metallic component contained homogeneous catalyst and a water-insoluble organic solvent; Step 2: an adjustment step of a mixed polymer solution wherein the polymer solution, an additive, and water are mixed; and Step 3: a water layer removal step after a phase separation of the mixed polymer solution, wherein the additive is an alcohol and/or an ether, and a mixing amount of the additive in step 2 is 2 times mol or more with respect to 1 mol of a metal in the homogeneous catalyst, and 20 mass% or less with respect to the polymer solution.

## Description

### BACKGROUND OF THE INVENTION

### Field of the Invention

The present invention relates to a catalyst removal method in which removing a homogeneous catalyst from a polymer solution, including a metallic component contained homogeneous catalyst and a water-insoluble organic solvent.

### Description of the Related Art

When a polymer is manufactured using a homogeneous catalyst, a metallic component in the homogeneous catalyst sometimes remain in the polymer. The metallic component remained in the polymer could be a cause of an equipment corrosion for manufacturing the polymer. In addition, the metallic component remained in the polymer sometimes brought degradation of the polymer by a reaction due to air, UV rays, etc., causing trouble in the manufacturing process such as an abnormality in the shape of polymer pellets, or having an influence on the polymer in hue. Further, the metallic component remained in the polymer sometimes caused quality issues such as a hygroscopicity improvement of the polymer or a contamination of foreign matter derived from the catalyst residue.

Patent article 1 (JP2009-91574A) or patent article 2 (JP2002-167406A) remove the homogeneous catalyst in the polymer solution using the acid compound. Further, patent article 3 (JP No. 3153650) remove the homogeneous catalyst in the polymer solution using a solid magnesium salt.

However, it was difficult to solve the issue of equipment corrosion due to the use of acid compound, according to the catalyst removal methods mentioned in the patent articles 1 and 2. In addition, the acid compound additional process was necessary and that it was not capable to simplify the process. The catalyst removal method mentioned in patent article 3 required a solid content separation process due to the use of the solid magnesium salt, and that it was not capable to simplify the process. In addition, according to the catalyst removal methods described in patent articles 1 to 3, foreign matters may be contaminated in the polymer due to the use of the acid compound or the solid magnesium salt.

Patent Document 1: JP2009-91574A
Patent Document 2: JP2002-167406A
Patent Document 3: JP No. 3153650

### BRIEF SUMMARY OF THE INVENTION

The present invention, considering the above prior methods, is to provide a method for catalyst removal with which it is possible to easily remove the homogeneous catalyst from the polymer solution and to eliminate problems such as an equipment corrosion, an abnormality in the shape of polymer pellets, a deterioration of the polymer in hue or hygroscopicity, and a contamination of the polymer with a foreign matter.

### DETAILED DESCRIPTION OF THE INVENTION

As a result of keen examination to solve the above problems, the present inventors have found that the above problems can be solved by including a particular process and adding a particular additive to the polymer solution in a specific amount, which lead to a completion of the invention.

The summary of the invention to solve the above problems is as follows.
[1] A method for a catalyst removal removing a homogeneous catalyst from a polymer solution, including the metallic component contained homogeneous catalyst and a water-insoluble organic solvent, is:
   Step 1: a preparation step of the polymer solution, including the metallic component contained homogeneous catalyst and the water-insoluble organic solvent;
   Step 2: an adjustment step of a mixed polymer solution wherein the polymer solution, an additive, and water are mixed; and
   Step 3: a water layer removal step after a phase separation of the mixed polymer solution.

   The additive is an alcohol and/or an ether.
   A mixing amount of the additive in step 2 is 2 times mol or more with respect to 1 mol of a metal in the homogeneous catalyst, and 20 mass% or less with respect to the polymer solution.
[2] The method for catalyst removal of the above [1], in which the mixing amount of the additive in step 2 is less than 5 mass% with respect to the polymer solution.
[3] The method for catalyst removal of the above [1] or [2], in which a difference between Hansen solubility parameter of the additive and the same of the water-insoluble organic solvent in an absolute value is 1 MPa^{1/2} or more and 17 MPa^{1/2} or less. And a difference between Hansen solubility parameter of the additive and the same of water in an absolute value is 35 MPa^{1/2} or less.
[4] The method for catalyst removal of either one of the above [1] to [3], in which the homogeneous catalyst includes an organo alkalimetal compound.
[5] The method for catalyst removal of either one of the above [1] to [4], in which
   step 2 comprises an adjustment step of an additive mixed polymer solution by mixing the polymer solution and the additive and an adjustment step of a water mixed polymer solution by mixing the additive mixed polymer solution and water, in this order, and
   step 3 is the water layer removal step after the phase separation of the water mixed polymer solution.

According to the method for catalyst removal of the invention, the homogeneous catalyst in the polymer solution can be removed by an easy method, in which a specific process is applied and a specific additive in a specific amount is mixed to the polymer solution, including the metallic component contained homogeneous catalyst and the water-insoluble organic solvent, and an acid compound, a solid magnesium salt, etc. are not added. The polymer obtained by the method for catalyst removal according to the invention has less residue of the metallic component derived from the catalyst, thus, problems such as the equipment corrosion, the abnormality in the shape of the polymer pellets, the deterioration of the polymer in hue or hygroscopicity, and the contamination of the foreign matter in the polymer can be solved. In addition, a load to an activated sludge can be inhibited, due to low additive concentration extracted in a water layer.

The catalyst removal method according to the invention is the catalyst removal method in which removing the homogeneous catalyst from the polymer solution, including the metallic component contained homogeneous catalyst and the water-insoluble organic solvent, and contains the following steps 1 to 3. In the steps, the additive is alcohols and/or ethers, and the mixing amount of the additive in step 2 is 2 times mol or more with respect to 1 mol of the metals in the homogeneous catalyst and is 20 mass% or less with respect to the polymer solution.

Hereinafter, steps 1 to 3 are described in order of their appearance.

### (Step 1)

Step 1 of the invention is a preparation step of the polymer solution, including the metallic component contained homogeneous catalyst and the water-insoluble organic solvent.

The metallic component contained homogeneous catalyst is not particularly limited. The homogeneous catalyst is a catalyst which can be solved in the water-insoluble organic solvent. Concrete examples are organo alkalimetal compounds, organo alkaline earth metal compounds, the homogeneous catalysts including such as lanthanum-series metal compounds as a primary catalyst, and cyclopentadienyltitanium compounds. In the present specification, "the metallic component contained homogeneous catalyst" and "the homogeneous catalyst" include a residue of the catalyst derived from the above-mentioned homogeneous catalysts, and the above-mentioned catalyst residue include the metallic component.

The organo alkalimetal compounds include, for instance, organic monolithium compounds such as n-butyllithium, sec-butyllithium, t-butyllithium, hexyllithium, phenyllithium, stilbenelithium; organic polyvalent lithium compounds such as dilithiomethane, 1,4-dilithiobutane, 1,4-dilithio-2-ethylcyclohexane, 1,3,5-trilithio benzene, 1,3,5-tris(lithio methyl)benzene, organic sodium compounds such as sodium naphthalene, organic potassium compounds such as potassium naphthalene.

The organo alkaline earth metal compounds include, for instance, di-n-butyl magnesium, di-n-hexylmagnesium, diethoxy calcium, distearic acid calcium, di-t-butoxy strontium, diethoxy barium, diisopropoxy barium, diethylmercapto barium, di-t-butoxy barium, diphenoxy barium, diethylamino barium, distearic acid barium, diketyl barium.

The homogeneous catalysts including lanthanum-series metal compounds as the primary catalyst can exemplify such as a homogeneous catalyst including a primary catalyst of a lanthanoid metal salt, which is made from a lanthanoid metal, such as lanthanum, cerium, praseodymium, neodymium, samarium and gadolinium, and carboxylic acid, phosphorus containing organic acid, etc., and an auxiliary catalyst, such as an alkylaluminum compound, an organic aluminum hydride compound and an organic aluminum hydride compound.

The cyclopentadienyltitanium compounds include, for instance, cyclopentadienyl titanium halogenated compound, cyclopentadienyl(alkoxy)titanium halogenated compound, bis(cyclopentadienyl)titanium dihalogenated compound, bis(cyclopentadienyl)titanium dialkyl compound, bis(cyclopentadienyl)titanium diallylic compound and bis(cyclopentadienyl)titanium dialkoxy compound. Note, the cyclopentadienyltitanium compounds can be used by mixing a reducing agent, or canbe used alone without the reducing agent.

The reducing agent used with the cyclopentadienyltitanium compounds include various organo alkalimetal compounds such as organic alkylaluminum compounds, organic alkylmagnesium compounds, organic lithium compounds, organic alkali metal hydrides, etc.

Among the homogeneous catalysts, the organo alkalimetal compounds are preferable, and organic lithium compounds such as organic mono lithium compounds or organic polyvalent lithium compounds are more preferable. Note the organo alkalimetal compounds can be preliminary reacted with a secondary amine, such as dibutylamines, dihexylamines, dibenzylamines, pyrrolidines, hexamethyleneimines and heptamethyleneimines, and used as oprganic alkali metal amide compounds. These homogeneous catalysts can be used with 1 kind singly or optionally a combination of 2 or more kinds can be mixed and used.

The water-insoluble organic solvent is not particularly limited, as long as it solves the polymer. Concrete examples of the water-insoluble organic solvent are saturated hydrocarbons such as butane, pentane, hexane, heptane, cyclopentane, cyclohexane, methyl cyclohexane, dimethyl cyclohexane, trimethyl cyclohexane, ethyl cyclohexane, diethyl cyclohexane, decahydronaphthalene, bicycloheptane, tricyclodecane, hexahydroindene cyclohexane and cyclooctane; unsaturated hydrocarbons such as 1-butene, 2-butene, 1-pentene and 2-pentene; aromatic hydrocarbons such as benzene, toluene and xylene; nitrogen-containing carbon hydrides such as nitromethane, nitrobenzene, acetonitrile, dimethyl formamide and N-methyl pyrrolidone; ethers such as diethyl ether and tetrahydrofuran; halogenated hydrocarbons such as chloroform, dichloromethane, chlorobenzene and dichlorobenzene; and propylene glycols. Among all, unsaturated hydrocarbons, saturated hydrocarbons and aromatic hydrocarbons are preferable and the saturated hydrocarbons are more preferable. The abovementioned water-insoluble organic solvent can be used with 1 kind singly or optionally a combination of 2 or more kinds can be used.

In addition, Hansen solubility parameter of the water-insoluble organic solvent is preferably 13 MPa^{1/2} or more, more preferably 14 MPa^{1/2} or more and further preferably 15 MPa^{1/2} or more, and in addition, preferably 20 MPa^{1/2} or less, more preferably 19MPa^{1/2} or less and further preferably 18 MPa^{1/2} or less.

Hansen solubility parameter (HSP) is one of the solubility index showing how much a certain material melt in a certain other material, and according to the invention, it is determined by a relational expression of "(HSP)² = (dD)² + (dP)² + (dH)²". In the expression, "dD" shows "an energy derived from dispersion force among molecules", "dP" shows "an energy derived from a polarity force among molecules", and "dH" shows an energy derived from hydrogen bond force among molecules, and they are all physical properties according to the kind of substances. See Charles M. Hansen, "Hansen Solubility Parameters: A User's Handbook, Second Edition" CRC Press, Boca Raton FL, 2007.

The polymer solution is not particularly limited as long as it includes the above mentioned homogeneous catalyst and the water-insoluble organic solvent. The polymer solution is a state in which the polymer is solved in the water-insoluble organic solvent. The polymer is not particularly limited as long as it is solved in the water-insoluble organic solvent. Concrete examples of the polymer are styrene-butadiene-styrene block copolymer (SBS), styrene-ethylene-butadiene-styrene block copolymer (SEBS), styrene-isoprene-styrene block copolymer (SIS), styrene-ethylene-propylene-styrene block copolymer (SEPS), etc.

Weight-average molecular weight (Mw) of the polymer is not particularly limited, however, weight-average molecular weight in terms of polystyrene measured by gel permeation chromatography (GPC) using tetrahydrofuran (THF) as a solvent is preferably 30,000 to 300,000, and more preferably 35,000 to 250,000.

Further, the molecular weight distribution (Mw/Mn) of the polymer is not particularly limited, however, it is preferably 2.0 or less, more preferably 1.5 or less, and particularly preferably 1.2 or less. The molecular weight distribution (Mw/Mn) of the polymer is a value in which the above weight-average molecular weight (Mw) is divided by a number-average molecular weight (Mn) in terms of polystyrene measured by gel permeation chromatography (GPC) using tetrahydrofuran (THF) as a solvent.

According to the polymer solution of the invention, 1 kind singly or optionally 2 or more kinds of the polymer can be solved in the water-insoluble organic solvent.

As polymerization reaction obtaining the polymer solution, any of a radical polymerization, an anion polymerization, a cation polymerization, a coordination anionic polymerization, a coordination cation polymerization and a living polymerization can be used. The living polymerization can exemplify a living anion polymerization, a living cation polymerization, a living radical polymerization, etc. can be used as the living polymerization. Considering that controls of weight-average molecular weight and structure of the obtained polymer and operations of polymerization of the obtained polymer are easy, a polymerization reaction by the living polymerization is preferable and a polymerization reaction by the living anion polymerization is more preferable.

Polymerization is performed in presence of the metallic component contained homogeneous catalyst within a temperature range of generally 0 to 150°C, preferably 10 to 100°C, and particularly preferably 20 to 80°C. Polymerization reaction state can be any of a solution polymerization, a slurry polymerization, etc., however, removal of the reaction heat is easy when using the solution polymerization.

In case when the above-mentioned block copolymer is obtained as the polymer, in order to prevent chain length of only one specific component among monomer units constituting the block copolymer to be long, a randomizer, etc. can be used. Specially, in case when the polymerization reaction is progressed by the anionic polymerization, a Lewis-base compound can be preferably used as the randomizer.

Examples of the Lewis-base compound are ether compounds such as dimethyl ether, diethyl ether, diisopropyl ether, dibutyl ether, tetrahydrofuran, diphenyl ether, ethyleneglycol diethyl ether, ethyleneglycol methylphenyl ether; tertiary amine compounds such as tetramethylethylenediamine, trimethylamine, triethylamine, pyridine; alkali metal alkoxide compounds such as potassium-t-amyloxide, potassium-t-butyloxide; phosphine compounds such as triphenylphosphine can be exemplified. These Lewis-base compounds can be used singly or optionally a combination of 2 or more kinds can be used.

### (Step 2)

Step 2 of the invention is an adjustment step of a mixed polymer solution by mixing the polymer solution, the additive and water. By passing through step 2, the homogeneous catalyst in the polymer solution is capable to have an affinity with the additive, and the homogeneous catalyst having an affinity with the additive can be solved in water. A mixing sequence of the polymer solution, the additive, and water is not particularly limited. The mixing sequence can be, for instance, the polymer solution and the additive are mixed, and then water is mixed, or the polymer solution and water are mixed, and then the additive is mixed. Further, the polymer solution, the additive and water can be mixed simultaneously. Furthermore, the additive and water can be sequentially added to the polymer solution, or the preliminary mixed additive and water can be mixed with the polymer solution.

According to the invention, considering that the homogeneous catalyst can be easily removed from the polymer solution, which include the metallic component contained homogeneous catalyst and the water-insoluble organic solvent, step 2 is preferably an adjustment step (hereinafter, referred to as "step 2A") of the additive mixed polymer solution in which the polymer solution and the additive are mixed, and an adjustment step (hereinafter, referred to as "step 2B") of a water mixed polymer solution in which the additive mixed polymer solution and the water are mixed are performed in this order (step 2A - step 2B in this order), or step 2B - step 2A in this order. Step 2 is more preferably performed in the order of step 2A - step 2B. In case when step 2 is performed by step 2A - step 2B in this order, the latter mentioned step 3 is a water layer removal step after the phase separation of the water mixed polymer solution obtained by step 2B.

In case when step 2 is performed by step 2B - step 2A in this order, step 2B is an adjustment step of the water mixed polymer solution by mixing the polymer solution obtained by step 1 and water, step 2A is an adjustment step of the additive mixed polymer solution by mixing the water mixed polymer solution and the additive, and step 3 is the water layer removal step after the phase separation of the additive mixed polymer solution obtained by step 2A.

The additive according to the invention is alcohols and/or ethers. Alcohols are not particularly limited, however, methanol, ethanol, isopropyl alcohol, n-propyl alcohol, isobutyl alcohol, n-butyl alcohol, cyclohexanol, etc. can be exemplified. Further, ethers are not particularly limited, however, ethylene glycol monomethyl ether, ethylene glycol monoethyl ether, ethylene glycol monobutyl ether, diethylene glycol monomethyl ether, diethylene glycol monoethyl ether, ethylene glycol dimethyl ether, ethyleneglycol diethyl ether, dioxane, tetrahydrofuran, etc. can be exemplified. Among all, considering the affinity with the homogeneous catalyst, alcohols are preferable, alcohols having a carbon number of 3 or less is more preferable, and methanol is further preferable.

Mixing amount of the additive is 2 times mol or more with respect to 1 mol of metals in the homogeneous catalyst and is 20 mass% or less with respect to the polymer solution. In case when mixing amount of the additive is less than 2 times mol with respect to 1 mol of metals in the homogeneous catalyst, the homogeneous catalyst and the additive do not show an efficient affinity, and that the homogeneous catalyst cannot be efficiently removed from the homogeneous catalyst in the latter mentioned step 3. Further, when mixing amount of the additive is more than 20 mass% with respect to the polymer solution, concentration of the additive extracted to the water layer in step 3 is increased. Concentration increase in the additive reduces microorganisms in a biological treatment layer, an activated sludge, when treating the additive extracted to the water layer by an activated sludge method. Thus, load to the activated sludge is increased. Further, in case when concentration of the additive extracted to the water layer is high, the additive concentration can be reduced by distilling the removed water layer in order to reduce load to the activated sludge. In this case however, the process steps increase and that the productivity of the polymer solution reduces. By making the mixing amount of the additive in the homogeneous catalyst 2 times mol or more with respect to 1 mol of metals in the homogeneous catalyst and 20 mass% or less with respect to the polymer solution, the homogeneous catalyst and the additive show an efficient affinity. Thus, in the latter mentioned step 3, the homogeneous catalyst can be efficiently solved in the water layer. In addition, load to the activated sludge can be reduced, and the productivity of the polymer solution becomes superior. In this respect, mixing amount of the additive, with respect to 1 mol of metal in the homogeneous catalyst, is preferably 9 times mol or more, more preferably 50 times mol or more, and further preferably 100 times mol or more. Upper limit of the additive mixing amount, with respect to 1 mol of metal in the homogeneous catalyst, is not particularly limited, however, it is preferably 800 times mol or less, and more preferably 200 times mol or less. Further, the mixing amount of the additive with respect to the polymer solution is preferably less than 10 mass%, more preferably less than 5 mass%, and further preferably less than 3 mass% . Lower limit of the additive mixing amount with respect to the polymer solution is not particularly limited, however, it is preferably 0.1 mass% or more, and more preferably 1.0 mass% or more.

Further, Hansen solubility parameter of the additive is preferably 15 MPa^{1/2} or more, more preferably 20 MPa^{1/2} or more and further preferably 25 MPa^{1/2} or more, and in addition, preferably 35 MPa^{1/2} or less, more preferably 33 MPa^{1/2} or less and further preferably 31 MPa^{1/2} or less.

Distilled water or deionized water can be exemplified as said water.

Mixing amount of water is not particularly limited, however, with respect to the polymer solution, it is preferably 5 mass% or more, more preferably 10 mass% or more and further preferably 15 mass% or more, and in addition, preferably 50 mass% or less and more preferably 40 mass% or less.

Mixing method is not particularly limited and a method using mixing apparatus such as an agitator, a shaker, a rotary, etc. are exemplified. Further, a method using dispersion kneaders such as a homogenizer, a ball mill, a sand mill, a roll mill, a planetary mixer and a planetary kneader are also exemplified.

Mixing time for adjusting the mixed polymer solution is not particularly limited. The mixing time is a time for mixing the polymer solution and the additive or a time for mixing the additive mixed polymer solution and water, in case when step 2 is performed by step 2A-step 2B in this order. The mixing time is preferably 0.5 to 60 min., more preferably 1 to 30 min., and further preferably 2 to 20 min. In addition, temperature when mixing is not particularly limited, and is preferably 10 to 100°C and more preferably 20 to 80°C.

The mixed polymer solution is prepared by the above step 2.

### (Step 3)

Step 3 of the invention is the water layer removal step after the phase separation of the mixed polymer solution. In step 3, the mixed polymer solution is separated into the polymer solution layer and the water layer. The homogeneous catalyst having an affinity with the additive is extracted to the water layer, thus, the homogeneous catalyst is removed from the polymer solution by removing the water layer. Separation of the polymer solution layer and the water layer in step 3 can be performed by using a decanter type separator using a specific gravity difference, a centrifugal separator or a countercurrent extractor. The water layer removal method is not particularly limited.

According to the above steps 1 to 3, the homogeneous catalyst can be removed from the polymer solution, including the metallic component contained homogeneous catalyst and the water-insoluble organic solvent.

A residue amount of the homogeneous catalyst as an impurity in the polymer solution obtained by the method for catalyst removal according to the invention is, with respect to the polymer, 60 ppm or less, preferably 50 ppm or less, more preferably 40 ppm or less, further preferably 35 ppm or less, and particularly preferably 1 to 20 ppm, on a mass basis. Consequently, the polymer obtained by the method for catalyst removal according to the invention can prevent trouble in the manufacturing step such as an abnormality in the shape of polymer pellets or a contamination of foreign matter derived from the catalyst residue, and thus, the polymer is superior in hue and hygroscopicity.

In addition, according to the method for catalyst removal of the invention, absolute values of the difference between Hansen solubility parameter of the additive and the same of the water-insoluble organic solvent is preferably 1 MPa^{1/2} or more, more preferably 5 MPa^{1/2} or more, further preferably 8 MPa^{1/2} or more and particularly preferably 10 MPa^{1/2} or more, and in addition, preferably 17 MPa^{1/2} or less, more preferably 16 MPa^{1/2} or less, further preferably 15 MPa^{1/2} or less and particularly preferably 14 MPa^{1/2} or less. Further, absolute values of the difference between Hansen solubility parameter of the additive and the same of water is preferably 35 MPa^{1/2} or less, more preferably 30 MPa^{1/2} or less, further preferably 25 MPa^{1/2} or less, particularly preferably 20 MPa^{1/2} or less and in general, 15 MPa^{1/2} or more. When the difference between Hansen solubility parameter of the additive and the same of the water-insoluble organic solvent is within the above range, the homogeneous catalyst including the metallic component and the additive are capable to show an efficient affinity. Further, when the difference between Hansen solubility parameter of the additive and the same of water is within the above range, the metallic component contained homogeneous catalyst showing an affinity with the additive becomes easy to be solved in water. Namely, setting the difference between Hansen solubility parameter of the additive and the same of the water-insoluble organic solvent within the above range, and setting the difference between Hansen solubility parameter of the additive and the same of water within the above range, make the metallic component contained homogeneous catalyst to easily extract in water.

### EXAMPLES

Hereinafter, the invention is described referring to the examples, but the invention is not limited thereto. Note, "parts" and "%" in the present examples are on a mass basis unless specially mentioned.

### [Measurement of the homogeneous catalyst content in the polymer solution]

Crumbs were obtained by steam stripping the polymer solution obtained by step 1 at a temperature of 90 to 98°C. Next, the obtained crumbs were vacuum-dried and a solidified polymer was obtained. Approximately 1g of the polymer was weighed, decomposition treatment was performed by a strong acid, and an amount of the metal existing in the polymer was measured through an element analysis using IPC, Inductively Coupled Plasma.

### [Measurement of the residue amount of the homogeneous catalyst in the polymer solution]

Measurement was performed in the same manner as above, except using the polymer obtained by step 3.

### [Evaluation of the load to an activated sludge waste water treatment]

The load to the activated sludge waste water treatment was evaluated by the additive concentration in the removed water layer on the following standard. Evaluation of the load to the activated sludge waste water treatment becomes superior as the additive concentration is low. In case when the additive concentration is 30% or more, distillation is required to reduce the load on the activated sludge.

The additive concentration in the removed water layer was calculated by the following. The removed water layer was put quietly for a full day and night, 24 hours, the polymer was removed from the water layer, diluted thereof by ethanol, measured by a gas chromatography (GC6850 series, column HP-1, made by Agilent Co.), and calculated from the peak area value of the additive.
A: 10% or less
B: 10% or more and less than 20%
C: 20% or more and less than 30%
D: 30% or more

### (Ex. 1 to 7 and Comp. Ex. 1 to 3)

### Preparation of the polymer solution (Step 1)

0.0434 parts of n-butyllithium as the metallic component contained homogeneous catalyst was added to a pressure-resistant reactor where 122 parts of cyclohexane, 0.0012 parts of N, N, N', N'- tetramethylethylenediamine (TMEDA) and 9.6 parts of styrene were stirred at 40°C, polymerized for an hour while raising the polymer temperature to 50°C, and polystyrene block polymer was obtained. Polymerization conversion of styrene at this point was 100%.

Apart of the reaction liquid was sampled and a weight-average molecular weight of the polystyrene block polymer was measured by a gel permeation chromatography. Weight-average molecular weight of the polystyrene block polymer was 14×10³. Note, the weight-average molecular weight was measured by a high speed liquid gel permeation chromatography having tetrahydrofuran as a carrier, as a polystyrene converted value.

Subsequently, 38.4 parts of isoprene was added taking an hour while controlling the reaction temperature between 50°C to 60°C. After the addition, further polymerized for an hour and styrene-isoprene di-block copolymer was obtained. Polymerization conversion of isoprene at this point was 100%. Sampling a part of the reaction liquid and measuring weight-average molecular weight of styrene-isoprene di-block copolymer (Component (b)) by gel permeation chromatography, it was 99×10³.

Subsequently, 0.0262 parts of dimethyldichlorosilane was added as a coupling agent, the coupling reaction was performed for 2 hours, styrene-isoprene-styrene tri-block copolymer (Component (a)) was formed, and then the polymer solution was obtained. The homogeneous catalyst including the metallic component in the polymer solution was 100 ppm on a mass basis, with respect to the polymer. Content of the homogeneous catalyst including the metallic component in the polymer solution was measured by the above method.

A part of the reaction liquid was sampled and measured by the gel permeation chromatography. Styrene unit content in the above tri-block copolymer was 20%, weight-average molecular weight of Component (a) was 188×10³ and a mass ratio of Component (a) and Component (b) was 6:4. Note the ratio of Component (a) and Component (b) was obtained from the peak area of each copolymer obtained by the high speed liquid gel permeation chromatography. In Ex. 7, n-hexane was used instead of cyclohexane.

### Adjustment of the additive mixed polymer solution (Step 2A)

The additive was added to the obtained polymer solution, cyclohexane solution (28 mass%) of styrene-isoprene-styrene tri-block copolymer, mixed thereof using a HOMOGENIZING MIXER (PRIMIX made), and the additive mixed polymer solution was obtained. The mixing temperature was 30°C, the residence time of the polymer solution in the HOMOGENIZING MIXER was 3 min. and a rotational number of the HOMOGENIZING MIXER was 8,000 rpm. Kinds and amounts of the additives are shown in Table 1. Note, the additive was not added in Comp. Ex. 1.

### Adjustment of the water mixed polymer solution (Step 2B)

Water corresponding to 1/4 of the obtained additive mixed polymer solution in mass was added, and further mixed thereof to obtain the water mixed polymer solution. The mixing temperature was 30°C, the residence time of the additive mixed polymer solution in the HOMOGENIZING MIXER was 3 min., and the rotational number of the HOMOGENIZING MIXER was 2,000 rpm.

### Separation of layers in the water mixed polymer solution and removal of the water layer (Step 3)

The obtained water mixed polymer solution was centrifugally separated (3,000 rpm, 5 min.), the polymer solution layer and the water layer were separated, and the polymer solution was obtained by removing the water layer.

Then a steam stripping was performed to the obtained polymer solution at a temperature of 90°C to 98°C, and crumbs were obtained. Subsequently, the crumbs were vacuum-dried to dry water and a solidified polymer was obtained.

### (Ex. 8)

In Ex. 8, the above step 1 - step 2B - step 2A - step 3 were performed in this order. Specifics are shown below.

The polymer solution was prepared in the same manner as the step 1. Subsequently, water corresponding to 1/4 of the obtained polymer solution, cyclohexane solution (28 mass%) of styrene-isoprene-styrene tri-block copolymer, in mass was added, and mixed thereof by using the HOMOGENIZING MIXER (PRIMIX made), and obtained the water mixed polymer solution (Step 2B). The mixing temperature was 30°C, the residence time of the additive mixed polymer solution in the HOMOGENIZING MIXER was 3 min. and the rotational number of the HOMOGENIZING MIXER was 2,000 rpm.

Then, the additive was added to the water mixed polymer solution, and mixed thereof to obtain the additive mixed polymer solution (Step 2A). The mixing temperature was 30°C, the residence time of the polymer solution in the HOMOGENIZING MIXER was 3 min. and the rotational number of the HOMOGENIZING MIXER was 8,000 rpm. Kinds and amounts of the additives are shown in Table 1.

The obtained additive mixed polymer solution was centrifugally separated (3,000 rpm, 5 min.), the polymer solution layer and the water layer were separated, and the polymer solution was obtained by removing the water layer (Step 3).

Then a steam stripping was performed to the water-insoluble organic solvent in the obtained polymer solution, while keeping a temperature of a solvent removal layer to 90 to 98°C, and the crumbs were obtained. Subsequently, the crumbs were vacuum-dried to dry water and a solidified polymer was obtained.

**Table 1**

| | | | | Ex.1 | Ex. 2 | Ex. 3 | Ex. 4 | Ex. 5 | Ex. 6 | Ex. 7 | Ex. 8 | Comp. Ex.1 | Comp. Ex. 2 | Comp. Ex.3 |
|---|---|---|---|---|---|---|---|---|---|---|---|---|---|---|
| Polymerization step (Step 1) | Homogeneous catalyst | Kind | | BuLi | BuLi | BuLi | BuLi | BuLi | BuLi | BuLi | BuLi | BuLi | BuLi | BuLi |
| | | Amount in terms of "Li" | mass pts. | 0.28 | 0.28 | 0.28 | 0.28 | 0.28 | 0.28 | 0.28 | 0.28 | 0.28 | 0.28 | 0.28 |
| | Homogeneous catalyst content in polymer | Concentration | ppm | 100 | 100 | 100 | 100 | 100 | 100 | 100 | 100 | 100 | 100 | 100 |
| | Water-insoluble organic solvent | Kind | | CHX | CHX | CHX | CHX | CHX | CHX | n-HEX | CHX | CHX | CHX | CHX |
| | | SP Value | MPa^{1/2} | 16.7 | 16.7 | 16.7 | 16.7 | 16.7 | 16.7 | 14.8 | 16.7 | 16.7 | 16.7 | 16.7 |
| | | Amount | mass pts. | 7200 | 7200 | 7200 | 7200 | 7200 | 7200 | 7200 | 7200 | 7200 | 7200 | 7200 |
| Addifive mixing step (Step 2A) | Additive | Kind | | MeOH | MeOH | MeOH | MeOH | IPA | THF | MeOH | MeOH | (None) | MeOH | MeOH |
| | | SP Value | MPa^{1/2} | 29.2 | 29.2 | 29.2 | 29.2 | 23.5 | 18.6 | 29.2 | 29.2 | - | 29.2 | 29.2 |
| | | Amount | mass pts. | 990 | 495 | 195 | 12 | 366 | 439 | 195 | 195 | 0 | 2.5 | 3120 |
| | Amount of additive with respect to metal in homogeneous catalyst | | mol basis | 765.9 | 383.0 | 150.8 | 9.3 | 150.9 | 150.9 | 150.8 | 150.8 | 0 | 1.9 | 2413.6 |
| | Amount of additive with respect to polymer solution | | mass % | 9.90 | 4.95 | 1.95 | 0.12 | 3.66 | 4.39 | 1.95 | 1.95 | 0 | 0.02 | 31 |
| Water mixing step (Step 2B) | Water | SP Value | MPa^{1/2} | 47.8 | 47.8 | 47.8 | 47.8 | 47.8 | 47.8 | 47.8 | 47.8 | 47.8 | 47.8 | 47.8 |
| | | Amount | mass pts. | 2500 | 2500 | 2500 | 2500 | 2500 | 2500 | 2500 | 2500 | 2500 | 2500 | 2500 |
| | Amount of water with respect to polymer solution | | mass % | 25 | 25 | 25 | 25 | 25 | 25 | 25 | 25 | 25 | 25 | 25 |
| Steps in order | | | | 1⇒2A⇒2B⇒3 | 1⇒2A⇒2B⇒3 | 1⇒2A⇒2B⇒3 | 1⇒2A⇒2B⇒3 | 1⇒2A⇒2B⇒3 | 1⇒2A⇒2B⇒3 | 1⇒2A⇒2B⇒3 | 1⇒2B⇒2A⇒3 | 1⇒2B⇒3 | 1⇒2A⇒2B⇒3 | 1⇒2A⇒2B⇒3 |
| Difference in SP values of additive and water-insoluble organic solvent | | | MPa^{1/2} | 12.5 | 12.5 | 12.5 | 12.5 | 6.8 | 1.9 | 14.4 | 12.5 | - | 12.5 | 12.5 |
| Difference in SP values of additive and water | | | MPa^{1/2} | 18.6 | 18.6 | 18.6 | 18.6 | 24.3 | 29.2 | 18.6 | 18.6 | - | 18.6 | 18.6 |
| Residue amount of homogeneous catalyst in polymer | | Concentration | ppm | 7.7 | 10.5 | 10.4 | 24.7 | 37.4 | 48.6 | 10.5 | 51.5 | 65.5 | 61.9 | 20.9 (Polymer partially coagulated) |
| Concentrafion of addifive in water layer | | | mass % | 27.3 | 15.5 | 6.2 | 0.4 | 11.2 | 13.4 | 6.2 | 7.1 | 0 | 0.1 | 54.5 |
| Load on activated sludge | | | | C | B | A | A | B | B | B | A | A | A | D |

| | | | | | | | | | | | | | | |
|---|---|---|---|---|---|---|---|---|---|---|---|---|---|---|
| BuLi : n-butyllithium CHX : cyclohexane n-HEX : n-hexane MeOH : methanol IPA : isopropyl alcohol THF : tetrahydrofuran SP Value : Hansen solubility parameter | | | | | | | | | | | | | | |

Table 1 indicates that the residue amount of the homogeneous catalyst in the polymer can be reduced and the load to the activated sludge can be lowered, according to the method for catalyst removal of the invention.

## Claims

1. A method for removing a homogeneous catalyst from a polymer solution, including a metallic component contained homogeneous catalyst and a water-insoluble organic solvent, comprising:
Step 1: a preparation step of the polymer solution, including the metallic component contained homogeneous catalyst and the water-insoluble organic solvent;
Step 2: an adjustment step of a mixed polymer solution wherein the polymer solution, an additive, and water are mixed; and
Step 3: a water layer removal step after a phase separation of the mixed polymer solution, wherein
the additive is at least one of an alcohol and an ether, and
a mixing amount of the additive in step 2 is 2 times mol or more with respect to 1 mol of a metal in the homogeneous catalyst, and 20 mass% or less with respect to the polymer solution.

2. The method for catalyst removal according to claim 1, wherein
the mixing amount of the additive in step 2 is less than 5 mass% with respect to the polymer solution.

3. The method for catalyst removal according to claim 1 or 2, wherein
a difference between Hansen solubility parameter of the additive and the same of the water-insoluble organic solvent in an absolute value is 1 MPa^{1/2} or more and 17 MPa^{1/2} or less, and
a difference between Hansen solubility parameter of the additive and the same of the water in an absolute value is 35 MPa^{1/2} or less.

4. The method for catalyst removal according to any one of claims 1 to 3, wherein the homogeneous catalyst includes an organo alkali-metal compound.

5. The method for catalyst removal according to any one of claims 1 to 4, wherein
step 2 comprises an adjustment step of an additive mixed polymer solution by mixing the polymer solution and the additive and an adjustment step of a water mixed polymer solution by mixing the additive mixed polymer solution and water, in this order, and
step 3 is the water layer removal step after the phase separation of the water mixed polymer solution.
